# EUROPÄISCHE PATENTANMELDUNG

(11) **EP 3 800 014 A1**
(43) Veröffentlichungstag der Anmeldung: **07.04.2021**
(21) Anmeldenummer: 19200679.9
(22) Anmeldetag: 01.10.2019
(51) Int. Cl.: B25J 15/02, B25J 19/00

(54) **ROBOTER ZUM GREIFEN UND/ODER HALTEN VON GEGENSTÄNDEN**

(71) Anmelder: SMW-AUTOBLOK Spannsysteme GmbH, 88074 Meckenbeuren (DE)
(72) Erfinder: Maurer, Eckhard, 88094 Oberteuringen (DE)
(74) Vertreter: Engelhardt, Volker

(57) **Zusammenfassung**

Bei einem Roboter (1) zum Greifen und/oder Halten von Gegenständen (2), insbesondere von Werkstücken, Werkzeugen oder Trägerteilen,
bestehend aus:
- mindestens einem Roboterarm (3, 4, 5), der an einem Traggestell (19) abgestützt ist und im Raum in mindestens einem translatorischen und/oder rotatorischen Freiheitsgrad beweglich ist,
- einer Greif- und/oder Haltevorrichtung (6), an der der jeweilige Gegenstand (2) lageorientiert abgestützt und/oder rotierbar gehalten ist,
- mindestens einem in der Greif- und/oder Haltevorrichtung (6) vorgesehenen Elektromotor (9), durch den ein Drehmoment und/oder eine Spannkraft erzeugt ist, die auf den Gegenstand (2) einwirkt,
- und aus einer in dem Roboterarm (5) gelagerten Antriebswelle (24), die mit der Greif- und/oder Haltevorrichtung (6) trieblich gekoppelt ist, vorzugsweise derart, dass die Greif- und/oder Haltevorrichtung (6) um die eigene Längsachse (6') rotiert,
soll die an dem freien Ende des Roboterarms (5) angeordnete Greif- und/oder Haltevorrichtung (6) im Raum frei beweglich sein, dass also die Rotation um die eigene Längsachse (6') beliebig oft und schnell ausgeführt werden kann.

Dies ist dadurch erreicht, dass zwischen einer freien Stirnseite (10) des endseitigen Roboterarms (5) und der Greif- und/oder Haltevorrichtung (6) eine Schnittstelle (31) vorgesehen ist, die von einem drehfest an dem Roboterarm (5) befestigten Koppler (25) und von einem an diesen angepassten Flansch (11) überbrückt ist, der drehfest mit der Greif- und/oder Haltevorrichtung (6) und der Antriebswelle (24) verbunden ist, dass in dem Koppler (25) eine erste induktiv betriebene Sende-Empfangseinrichtung (12) vorgesehen ist, die über eine dem Roboterarm (5) zugebrachte elektrische Leitung (14) mit einer Stromquelle (15) verbunden ist, dass in dem Flansch (11) eine zweite induktiv betriebene Sende-Empfangseinrichtung (13) vorgesehen ist, die mit dem Elektromotor (9) in der Greif- und/oder Haltevorrichtung (6) über elektrische Leitungen (14) verbunden ist, und dass zwischen dem Koppler (25) und dem Flansch (11) ein Luftspalt (21) als Bestandteil der Schnittstelle (31) vorhanden ist.

## Beschreibung

Die Erfindung bezieht sich auf einen Roboter zum Greifen und/oder Halten von Gegenständen nach dem Oberbegriff des Patentanspruches 1.

Solche Robotersysteme werden zur Unterstützung von manuellen Arbeiten seit Jahrzehnten, beispielsweise in der Fertigungsindustrie, eingesetzt. Die Roboter transportieren oder halten schwere Gegenstände im Raum, sodass diese frei zugänglich sind, um maschinell oder manuell bearbeitet werden können.

Die Roboter bestehen aus mehreren gelenkig miteinander verbundenen Roboterarmen. Die Gelenke zwischen den Roboterarmen können dabei als Kardangelenke, als Drehgelenke in Form von Scharnieren oder Kugelkopfgelenken ausgestaltet sein. Demnach ist das freie Ende des Roboterarms in mehreren rotatorischen und/oder translatorischen Freiheitsgraden beweglich.

Die für die Bewegung der einzelnen Roboterarme erforderlichen Antriebssysteme bestehen oftmals aus einem Elektromotor, der jeweils an einer Stromquelle anzuschließen ist, um die erforderliche Energie bzw. elektrische Spannung zu erhalten, wodurch die Drehbewegungen der einzelnen Roboterarme erfolgen.

Zur Aufnahme der Gegenstände weist das freie Ende des Roboterarms eine Greif- und/oder Haltevorrichtung auf, in der ein weiterer Elektromotor eingebaut ist. Durch diesen Elektromotor soll nämlich mindestens ein Druckstück beweglich bzw. angetrieben sein. Das jeweils angetriebene Druckstück kann demnach in Richtung der Längsachse oder senkrecht zu der Greif- und/oder Haltevorrichtung verfahren werden und wirkt mit mindestens einem weiteren Druckstück zusammen, das entweder ortsfest an der Greif- und/oder Haltevorrichtung angebracht ist oder das ebenso mit dem Elektromotor trieblich gekoppelt ist und folglich die beiden Druckstücke aufeinander zu bzw. voneinander wegbewegt werden können. Zwischen den jeweiligen Druckstücken ist der eingespannte Gegenstand angeordnet, sodass dieser von der von dem Elektromotor aufgewandten Zustellkraft zwischen den Druckstücken gehalten ist.

Die Greif- und/oder Haltevorrichtung ist dabei um ihre eigene Längsachse rotierbar an dem endseitigen Roboterarm abgestützt, sodass diese entgegen oder im Uhrzeigersinn gedreht werden kann, um beispielsweise die freie Zugänglichkeit des eingespannten Gegenstandes zu verbessern.

Als nachteilig hat sich herausgestellt, dass die Rotationsmöglichkeit der Greif- und/oder Haltevorrichtung eingeschränkt ist, denn durch die für die elektrische Energieversorgung des Elektromotors erforderlichen Leitungen begrenzen diese die Verdrehmöglichkeiten. Wenn nämlich ein Rotationswinkel von 360° erreicht ist, dann verdrehen sich die elektrischen Leitungen ineinander, unabhängig davon, ob diese im Inneren oder auf der Außenseite zwischen dem Roboterarm und der angeschlossenen Greif- und/oder Haltevorrichtung verlegt sind.

Folglich können bislang bekannte Roboter ausschließlich eine maximale Rotation von 360° ausführen. Sobald der maximale Rotationswinkel erreicht ist, ist es zwingend erforderlich, die Greif- und/oder Haltevorrichtung zurückzustellen. Folglich können die bekannten Roboter eine begrenzte Rotation von +/- 360° bezogen auf ihre Längsachse durchführen.

Selbst wenn der Rotationswinkel der Greif- und/oder Haltevorrichtung durch Anschläge oder dergleichen begrenzt ist, unterliegen die elektrischen Leitungen einem erheblichen Verschleiß, denn durch die permanente Rotation der Greif- und/oder Haltevorrichtung wirken auf die elektrischen Leitungen Schwerkräfte, durch die die Leitungen nach einer bestimmten Betriebsdauer kaputt sind und daher ausgewechselt werden müssen.

Es ist daher Aufgabe der Erfindung, einen Roboter der eingangs genannten Gattung derart weiterzubilden, dass die an dem freien Ende des Roboterarms angeordnete Greif- und/oder Haltevorrichtung im Raum frei beweglich ist, dass also die Rotation um die eigene Längsachse beliebig oft und schnell ausgeführt werden kann.

Diese Aufgabe ist erfindungsgemäß durch die Merkmale des kennzeichnenden Teils von Patentanspruch 1 gelöst:
Weitere vorteilhafte Weiterbildungen der Erfindung ergeben sich aus den Unteransprüchen.

Dadurch, dass zwischen einer freien Stirnseite des endseitigen Roboterarms und der Greif- und/oder Haltevorrichtung eine Schnittstelle vorgesehen ist, die von einem drehfest an dem Roboterarm befestigten Koppler und von einem an diesen angepassten Flansch überbrückt ist, der drehfest mit der Greif- und/oder Haltevorrichtung und der Antriebswelle verbunden ist, dass in dem Koppler eine erste induktiv betriebene Sende-Empfangseinrichtung vorgesehen ist, die über eine dem Roboterarm zugebrachte elektrische Leitung mit einer Stromquelle verbunden ist, dass in dem Flansch eine zweite induktiv betriebene Sende-Empfangseinrichtung vorgesehen ist, die mit dem Elektromotor in der Greif- und/oder Haltevorrichtung über elektrische Leitungen verbunden ist, und dass zwischen dem Koppler und dem Flansch ein Luftspalt als Bestandteil der Schnittstelle vorhanden ist, ist eine freie Rotation der Greif- und/oder Haltevorrichtung im Raum gewährleistet, da die Energieversorgung des in der Greif- und/oder Haltevorrichtung vorhandenen Elektromotors über die beiden induktiv betriebenen Sende-Empfangseinrichtungen erfolgt. Die Energieversorgung des Elektromotors über die beiden induktiven Sende-Empfangseinrichtungen ermöglicht eine freie und schnelle Rotation der Greif- und/oder Haltevorrichtung mit beliebigen Rotationswinkeln. Ein Verschleiß von elektrischen Kabeln, die die Energieversorgung bei herkömmlichen Robotern übernehmen, entfällt vollständig.

Zudem übertragen die beiden Sende-Empfangseinrichtungen elektrische Signale, durch die die Bewegungen der Druckstücke einstellbar und permanent überwacht sind.

In der Zeichnung ist ein erfindungsgemäßes Ausführungsbeispiel eines Roboters dargestellt, das nachfolgend näher erläutert ist. Im Einzelnen zeigt:
- Figur 1: einen Roboter, mit drei Roboterarmen und einem an dem endseitigen Roboterarm angebrachten Flansch, durch den eine Greif- und/oder Haltevorrichtung rotierbar angetrieben ist, mit zwei der Greif- und/oder Haltevorrichtung zugeordneten an dieser radial beweglich abgestützten Druckstücken zur Halterung eines Gegenstandes, in perspektivischer Ansicht,
- Figur 2a: ein vergrößerter Ausschnitt des freien Endes des endseitigen Roboterarms gemäß Figur 1, mit einer außenseitig verlaufenen Verkabelung,
- Figur 2b: das freie Ende des Roboterarms gemäß Figur 1, mit einer innenseitigen verlaufenen Verkabelung,
- Figur 3a: der Roboterarm gemäß Figur 2a, mit elektrischen Anschlüssen zur Energie und/oder Signalübertragung bezüglich der Bewegung und Steuerung des Elektromotors in der Greif- und/oder Haltevorrichtung,
- Figur 3b: der Roboterarm gemäß Figur 2b, mit elektrischen Anschlüssen zur Energie und/oder Signalübertragung bezüglich der Bewegung und Steuerung des Elektromotors in der Greif- und/oder Haltevorrichtung,
- Figur 4a: ein Schnitt durch den Roboterarm gemäß Figur 2a,
- Figur 4b: ein Schnitt durch den Roboterarm der Figur 2b
- Figur 5a: ein Schnitt durch den Roboterarm gemäß Figur 3a, und
- Figur 5b: ein Schnitt durch den Roboterarm gemäß Figur 3b.

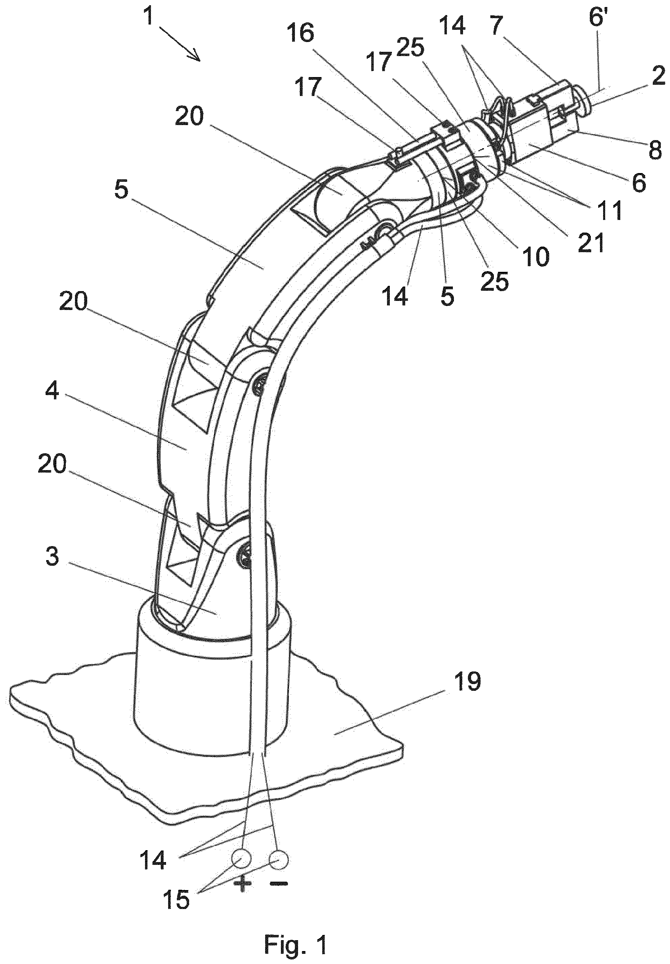

In Figur 1 ist ein Roboter 1 abgebildet, durch den ein Gegenstand 2 im Raum gegriffen und gehalten ist.

Der Gegenstand 2 kann dabei wahlweise ein zu bearbeitendes Werkstück sein, durch das Bearbeitungsschritte ausgeführt werden können. Sollte der Gegenstand 2 ein Werkzeug sein, ist dieses um die eigene Längsachse rotierbar gelagert und angetrieben. Die Gegenstände 2 können auch sonstige Trägerteile sein, durch die die Werkstücke oder Werkzeuge arretiert sind.

Der Roboter 1 weist drei Roboterarme 3, 4 sowie 5 auf, die jeweils über ein Gelenk 20 miteinander verbunden sind. Aufgrund des jeweils vorhandenen Gelenkes 20 sind die Roboterarme 3, 4 und 5 relativ zueinander beweglich. Das freie Ende 10 des endseitigen Roboterarms 5 kann daher in sechs Freiheitsgraden bewegt werden, nämlich in drei translatorischen und drei rotatorischen Freiheitsgraden.

Zudem ist der erste Roboterarm 3 an einem Traggestell 19 befestigt. Das Traggestell 19 kann dabei ein Werkzeugtisch, ein Maschinengestell oder dergleichen sein. An dem Roboterarm 5 ist an dessen freier Stirnseite 10 eine Greif- und/oder Haltevorrichtung 6 befestigt, die um ihre Längsachse 6' rotierbar ist. Der Greif- und/oder Haltevorrichtung 6 sind zwei Druckstücke 7 und 8 zugeordnet, die an dieser radial beweglich, also im gezeigten Ausführungsbeispiel in Richtung der Längsachse 6' oder entgegengesetzt dazu an der Greif- und/oder Haltevorrichtung 6 radial verschiebbar gelagert sind. Für den Antrieb der Druckstücke 7, 8 ist in der Greif- und/oder Haltevorrichtung 6 ein Elektromotor 9 vorzusehen.

Um die Greif- und/oder Haltevorrichtung 6 um ihre Längsachse 6' rotieren zu können, ist an dem endseitigen Roboterarm 5 an dessen freier Stirnseite 10 ein Koppler 25 vorgesehen, der zu der Greif- und/oder Haltevorrichtung 6 räumlich beabstandet ist.

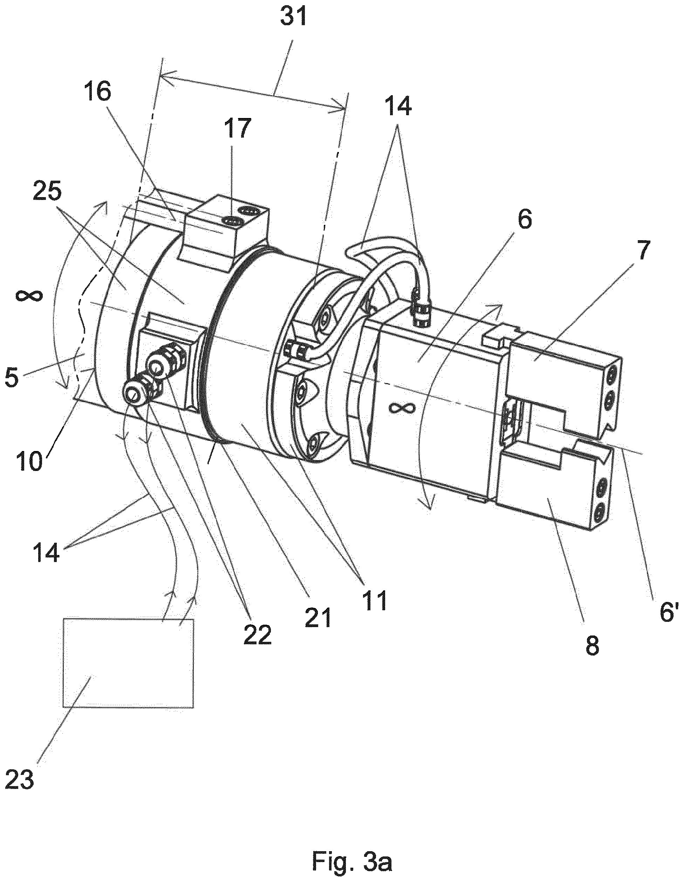

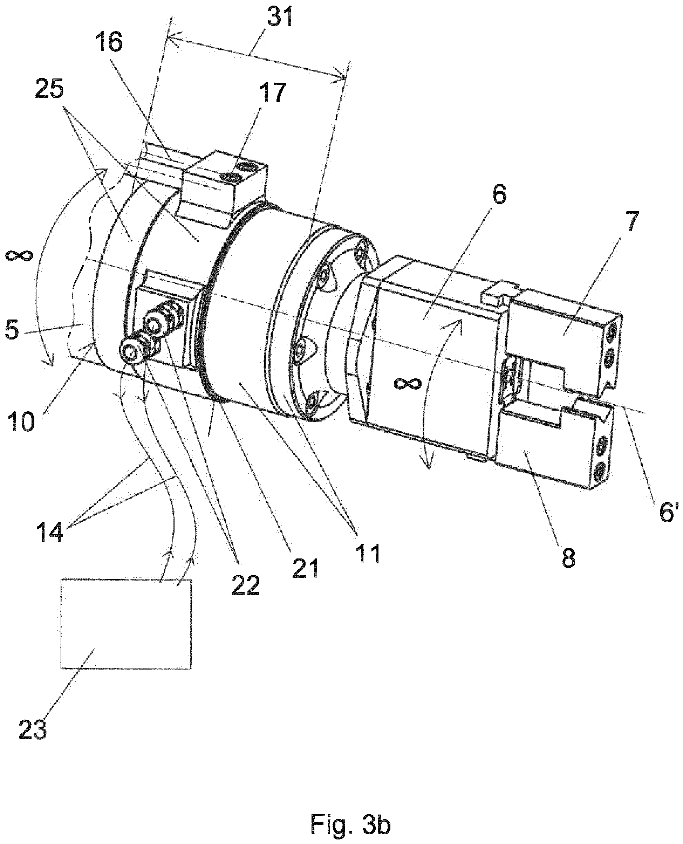

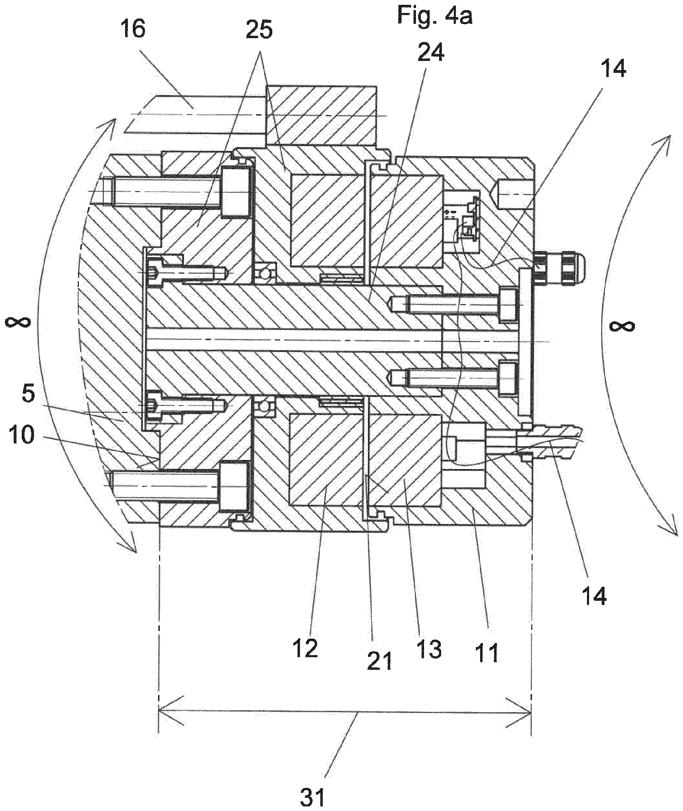

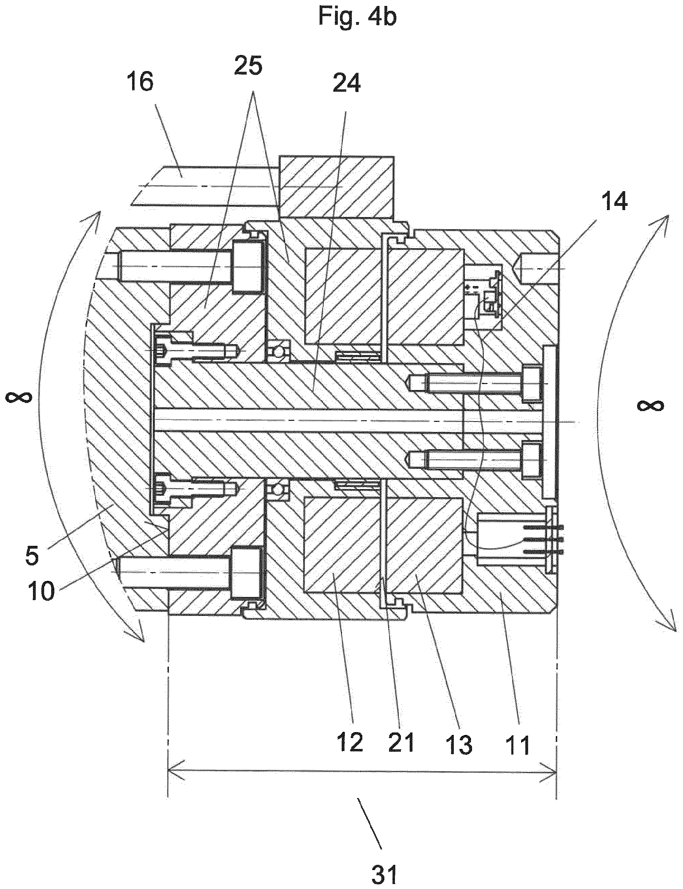

Insbesondere den Figuren 3a, 3b sowie 4a und 4b ist zu entnehmen, dass zwischen dem Koppler 25 und der Greif- und/oder Haltevorrichtung 6 ein Flansch 11 vorgesehen ist, durch den folglich die Greif- und/oder Haltevorrichtung 6 an dem Roboterarm 5 angebracht ist. Oftmals sind nämlich die freien Stirnseiten 10 der Roboterarme 5 derart ausgestaltet, dass kundenspezifische Greif- und/oder Haltevorrichtungen 6 nicht unmittelbar an den Roboterarm 5 angebaut werden können. Dieser Übergangsbereich zwischen dem endseitigen Roboterarm 5 und der Greif- und/oder Haltevorrichtung (6) ist definitionsgemäß als Schnittstelle 31 bezeichnet bzw. abgebildet. Zudem ist der Elektromotor 9 in der Greif- und/oder Haltevorrichtung 6 sowohl mit elektrischer Energie bzw. Spannung als auch mit Steuer-Signalen für den Betrieb der der Greif- und/oder Haltevorrichtung 6 zu versorgen. Um die Energie- und Signalübertragung zwischen dem Roboterarm 5 und der Greif- und/oder Haltevorrichtung 6 ohne elektrische Leitungen zu gewährleisten, ist daher zunächst zwischen dem Koppler 25 und dem Flansch 11 ein Luftspalt 21 vorgesehen. Zudem soll die Greif- und/oder Haltevorrichtung 6 um ihre eigene Längsachse 6' rotieren. Zu diesem Zweck ist im Inneren des Kopplers 25, der zweiteilig ausgestaltet ist, eine Antriebswelle 24 vorgesehen, die in dem Koppler 25 drehbar gelagert ist. Die Antriebswelle 24 steht in trieblicher Wirkverbindung mit dem Flansch 11, sodass die Rotationsbewegungen und Rotationsgeschwindigkeiten der Antriebswelle 24 unmittelbar auf den Flansch 11 übertragen sind. Der Flansch 11 ist mit der Greif- und/oder Haltevorrichtung 6 gekoppelt, sodass die Rotationsbewegungen des Flansches 11 synchron auf die Greif- und/oder Haltevorrichtung 6 übertragen sind. Folglich können zwischen dem Flansch 11 und der Greif- und/oder Haltevorrichtung 6 elektrische Leitungen 14 verlaufen. Die Antriebswelle 24 durchgreift folglich die Schnittstelle 31 und dem diesen zugeordneten Luftspalt 21.

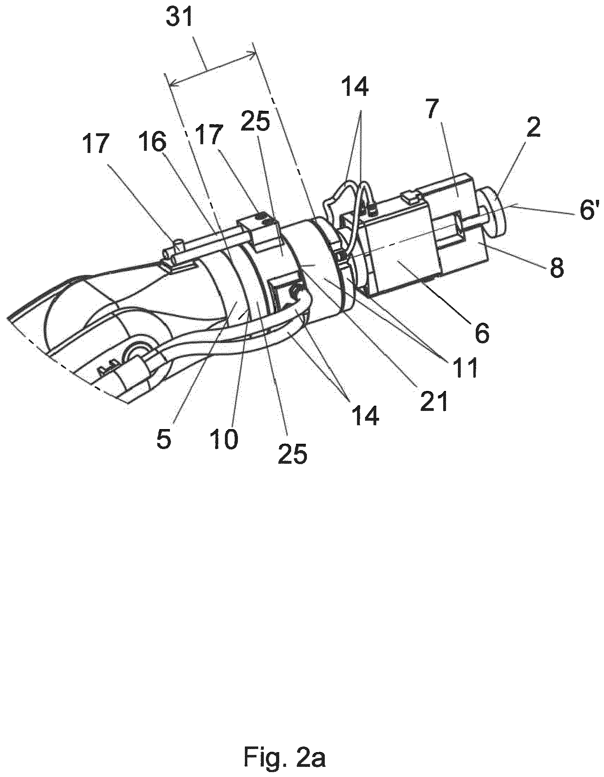

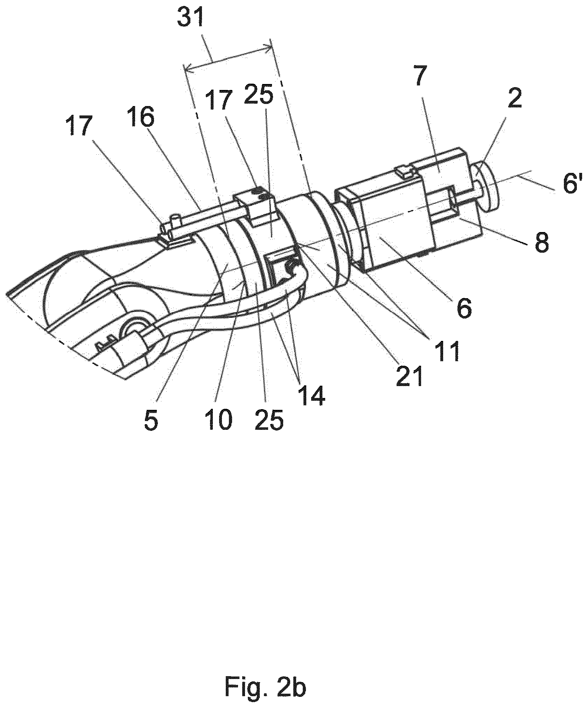

Zur Energieversorgung und/oder Signalübertragung für den Elektromotor 9 in der Greif- und/oder Haltevorrichtung 6 sind zwei Sende-Empfangseinrichtungen 12 und 13 gemäß den Figuren 4a bis 5b vorgesehen. Die erste Sende-Empfangseinrichtung 12 ist dabei in dem Koppler 25 und die zweite Sende-Empfangseinrichtung 13 in dem Flansch 11 der Greif- und/oder Haltevorrichtung 6 eingebaut. Die beiden Sende-Empfangseinrichtungen 12, 13 sind induktiv betrieben, sodass elektrische Energie und/oder elektrische Signale wechselweise zwischen diesen Sende-Empfangseinrichtungen 12 und 13 übertragen werden können. Zum einen kann daher die Energieversorgung des Elektromotors 9 über die Sende-Empfangseinrichtungen 12 und 13 erfolgen und zum anderen können wechselweise elektrische Signale gemäß den Figuren 2a bis 3b von einer Steuereinrichtung 23 über elektrische Anschlüsse 22 an die Greif- und/oder Haltevorrichtung 6 geleitet sein. Die Steuereinrichtung 23 liefert dabei Parameter sowie Zustellbewegungssignale an den Elektromotor 9 und es können die Druckstücke 7, 8 derart gesteuert sein, dass die aufgewendeten Haltekräfte durch nicht dargestellte Sensoren ermittelt und an die Steuereinrichtung 23 weitergeleitet werden, um derart den Elektromotor 9 zu steuern, dass dessen Spannkräfte bzw. Drehmomente erhöht bzw. fallweise verringert sind.

Sowohl die Energie- als auch die Signalübertragung zwischen der ersten Sende-Empfangseinrichtung 12 sowie zwischen der zweiten Sendeempfangseinrichtung 13 erfolgt rein induktiv, so dass die Rotationsbewegung des Flansches 11 ungehindert durch elektrische Leitungen ausgeführt werden kann.

Die elektrischen Leitungen 14 sind daher entweder an einer Stromquelle 15 oder an einem elektrischen Anschluss 26 gemäß den Figuren 2a bis 3b angeschlossen. Der elektrische Anschluss 22 ist dabei für die Steuereinrichtung 23 als Schnittstelle ausgestaltet.

Insbesondere den Figuren 2a bis 3b ist zu entnehmen, dass der Koppler 25 über eine Drehmomentstütze 16 an dem Roboterarm 5 drehfest angebracht ist. Die Rotation zwischen dem Koppler 25 und dem Flansch 11 der Greif- und/oder Haltevorrichtung 6 erfolgt demnach über die Antriebswelle 24, die im Inneren des Kopplers 25 und des Flansches 11 verläuft. Die Drehmomentstütze 16 ist mittels zweier Befestigungsschrauben 17 an dem Roboterarm 5 und dem Antriebsflansch 11 befestigt.

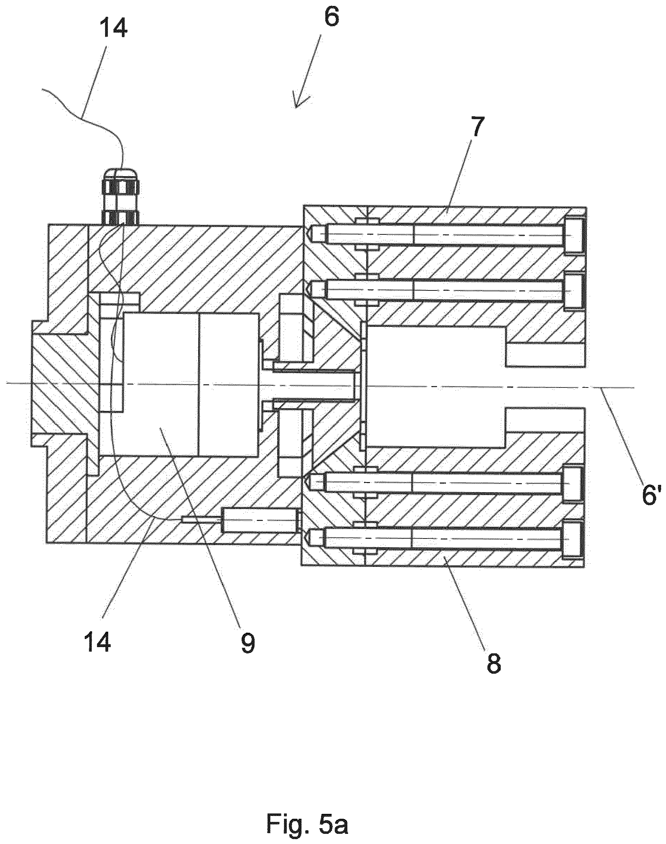

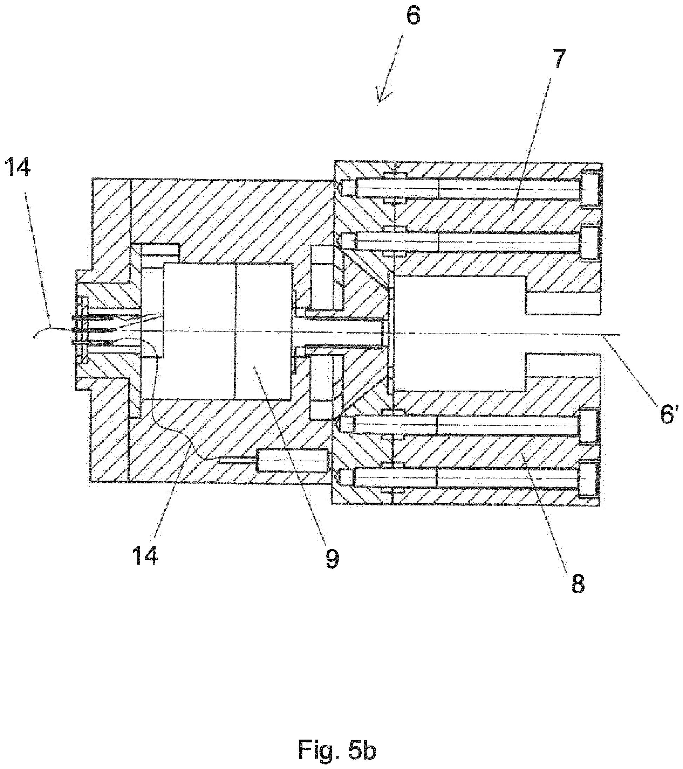

Insbesondere den Figuren 5a und 5b ist zu entnehmen, dass zwischen dem Antriebsflansch 11 und der daran angeschlossenen Greif- und/oder Haltevorrichtung 6 ein Luftspalt 21 vorhanden ist. Da die beiden Sende-Empfangseinrichtungen 12, 13 eine induktive Energie- und/oder Signalübertragung zur Verfügung stellen, sind zur Überbrückung des Luftspalts 21 keine elektrischen Leitungen vorzusehen. Somit kann die Greif- und/oder Haltevorrichtung 6 um ihre eigenen Längsachse 6' frei rotieren. Ein Zurückstellen in eine Ausgangsposition zur Einführung von elektrischen Kabeln entfällt demnach vollständig.

**Bezugsziffernliste**

| | |
|---|---|
| 1 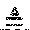 Roboter | 21 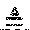 Luftspalt zu 6 + 11 |
| 2 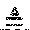 Gegenstand | 22 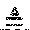 el. Anschluß |
| 3 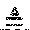 1. Roboterarm 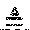 | 23 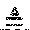 Steuereinrichtung |
| 4 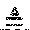 2. Roboterarm | 24 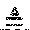 Antriebswelle |
| 5 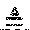 Roboterarm | 25 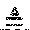 Koppler zwischen 5 + 11 |
| 6 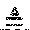 Greif- und/oder | 26 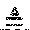 |
| Haltevorrichtung | 27 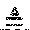 |
| 6' 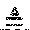 Längsachse v. 6 | 28 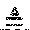 |
| 7, 8 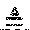 Druckstücke | 29 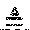 |
| 9 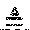 Elektromotor f. 6 | 30 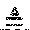 |
| 10 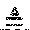 freie Stirnseite v. 5 | 31 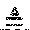 Schnittstelle |
| 11 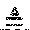 Flansch | |
| 12 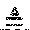 1. Sende-Empfangseinrichtung | |
| 13 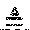 2. Sende-Empfangseinrichtung | |
| 14 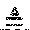 el. Leitung | |
| 15 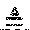 Stromquelle | |
| 16 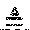 Drehmomentstütze | |
| 17 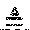 Befestigungsschrauben f. 16 | |
| 18 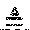 | |
| 19 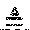 Traggestell | |
| 20 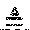 Gelenke zu 3/4/5 | |

## Patentansprüche

1. Roboter (1) zum Greifen und/oder Halten von Gegenständen (2), insbesondere von Werkstücken, Werkzeugen oder Trägerteilen,
bestehend aus:
- mindestens einem Roboterarm (3, 4, 5), der an einem Traggestell (19) abgestützt ist und im Raum in mindestens einem translatorischen und/oder rotatorischen Freiheitsgrad beweglich ist,
- einer Greif- und/oder Haltevorrichtung (6), an der der jeweilige Gegenstand (2) lageorientiert abgestützt und/oder rotierbar gehalten ist,
- mindestens einem in der Greif- und/oder Haltevorrichtung (6) vorgesehenen Elektromotor (9), durch den ein Drehmoment und/oder eine Spannkraft erzeugt ist, die auf den Gegenstand (2) einwirkt,
- und aus einer in dem Roboterarm (5) gelagerten Antriebswelle (24), die mit der Greif- und/oder Haltevorrichtung (6) trieblich gekoppelt ist, vorzugsweise derart, dass die Greif- und/oder Haltevorrichtung (6) um die eigene Längsachse (6') rotiert,
**dadurch gekennzeichnet,**
- **dass** zwischen einer freien Stirnseite (10) des endseitigen Roboterarms (5) und der Greif- und/oder Haltevorrichtung (6) eine Schnittstelle (31) vorgesehen ist, die von einem drehfest an dem Roboterarm (5) befestigten Koppler (25) und von einem an diesen angepassten Flansch (11) überbrückt ist, der drehfest mit der Greif- und/oder Haltevorrichtung (6) und der Antriebswelle (24) verbunden ist.
- **dass** in dem Koppler (25) eine erste induktiv betriebene Sende-Empfangseinrichtung (12) vorgesehen ist, die über eine dem Roboterarm (5) zugebrachte elektrische Leitung (14) mit einer Stromquelle (15) verbunden ist,
- **dass** in dem Flansch (11) eine zweite induktiv betriebene Sende-Empfangseinrichtung (13) vorgesehen ist, die mit dem Elektromotor (9) in der Greif- und/oder Haltevorrichtung (6) über elektrische Leitungen (14) verbunden ist,
- und **dass** zwischen dem Koppler (25) und dem Flansch (11) ein Luftspalt (21) als Bestandteil der Schnittstelle (31) vorhanden ist.

2. Roboter nach Anspruch 1,
**dadurch gekennzeichnet,**
**dass** die erste und zweite induktive Sende-Empfangseinrichtung (12, 13) elektrische Spannungen und/oder elektrische Signale wechselweise übertragen, durch die der Elektromotor (9) in der Greif- und/oder Haltevorrichtung (6) gesteuert und überwacht ist.

3. Roboter nach Anspruch 1 oder 2,
**dadurch gekennzeichnet,**
**dass** zwischen der freien Stirnseite (10) des endseitigen Roboterarms (5) und dem Koppler (25) eine Drehmomentstütze (16) befestigt ist, durch die der Koppler (25) drehfest an dem Roboterarm (4) arretiert ist.

4. Roboter nach Anspruch 3,
**dadurch gekennzeichnet,**
**dass** die Drehmomentstütze (16) als Stange oder Leiste ausgestaltet ist und dass die beiden freien Enden der Drehmomentstütze (16) mittels Befestigungsschrauben (16, 17) an dem Roboterarm (5) bzw. dem Koppler (25) befestigt sind.

5. Roboter nach einem der vorgenannten Ansprüche,
**dadurch gekennzeichnet,**
**dass** die Greif- und/oder Haltevorrichtung (6) im und entgegen des Uhrzeigersinns rotierbar ist und dass die Rotation der Greif- und/oder Haltevorrichtung (6) unendlich bzw. unbegrenzt in eine Rotationsrichtung verdrehbar ist.

6. Roboter nach einem der vorgenannten Ansprüche,
**dadurch gekennzeichnet,**
**dass** in dem endseitigen Roboterarm (5), dem Koppler (25) und dem Flansch (11) die Antriebswelle (24) gelagert und durchgeführt ist, die den Luftspalt (21) durchgreift und mit dem Flansch (11) trieblich gekoppelt ist.

7. Roboter nach einem der vorgenannten Ansprüche,
**dadurch gekennzeichnet,**
**dass** ein oder mehrere Druckstücke (7, 8) an der freien Stirnseite der Greif- und/oder Haltevorrichtung (6) angebracht sind, durch die der jeweilige Gegenstand (2) an der Greif- und/oder Haltevorrichtung (6) arretiert ist.

8. Roboter nach einem der vorgenannten Ansprüche,
**dadurch gekennzeichnet,**
**dass** zwischen dem Flansch (11) und der Greif- und/oder Haltevorrichtung (6) elektrische Leitungen (14) vorgesehen sind, die innerhalb oder außerhalb der Greif- und/oder Haltevorrichtung (6) bzw. des Flansches (11) verlaufen.

9. Roboter nach einem der vorgenannten Ansprüche,
**dadurch gekennzeichnet,**
**dass** die Druckstücke (7, 8) an der Greif- und/oder Haltevorrichtung (6) in radialer Richtung verschiebbar gelagert sind oder den als Werkzeug ausgestalteten Gegenstand (2) arretieren, derart, dass das Werkzeug ein Werkstück bearbeitet.

10. Vorrichtung nach einem der vorgenannten Ansprüche,
**dadurch gekennzeichnet,**
**dass** die Rotationsgeschwindigkeit der Greif- und/oder Haltevorrichtung (6) von der Antriebswelle (24) erzeugt ist.
